# FASCICULE DE BREVET EUROPEEN

(11) **EP 3 651 940 B1**
(45) Date de publication et mention de la délivrance du brevet: **22.05.2024**
(21) Numéro de dépôt: 18733292.9
(22) Date de dépôt: 29.06.2018
(51) Int. Cl.: B25H 3/06, B29C 44/04

(54) **PROCEDE DE FABRICATION D'UN SUPPORT POUR EQUIPEMENT**
VERFAHREN ZUR HERSTELLUNG EINES HALTERS FÜR GERÄTE
METHOD FOR PRODUCING A HOLDER FOR IMPLEMENTS

(30) Priorité: 10.07.2017 FR 1756489
(43) Date de publication de la demande: 20.05.2020
(73) Titulaire: 2L Solutions, 86300 Chauvigny (FR)
(72) Inventeur: LLINARES, Oscar, 86300 Chauvigny (FR); LLINARES, Eric, 86210 Archigny (FR)
(74) Mandataire: Argyma
(86) Numéro de dépôt international: PCT/EP2018/067513
(87) Numéro de publication internationale: WO 2019/011665

(56) Documents cités:
- FR-A1- 2 922 802
- GB-A- 2 463 269
- US-A- 4 389 454
- US-A1- 2016 129 583
- US-B1- 6 189 635

## Description

### DOMAINE TECHNIQUE GENERAL ET ART ANTERIEUR

La présente invention concerne le domaine du support d'équipement, en particulier, d'outils utilisés par des opérateurs lors du montage d'un moteur. Plus précisément la présente invention se rapporte à un procédé selon le préambule de la revendication 1. Un tel procédé est connu du document US 2016/129583 A1.

De manière connue, des outils tels qu'une pince, une tenaille, un tournevis et analogue sont rangés dans une caisse à outils. Afin de déterminer si des outils sont manquants, il est courant de prévoir un support d'outils comportant des empreintes pour loger les outils. Ainsi, si une empreinte est vide, on en déduit que l'outil est manquant.

Le support d'outil est réalisé de manière traditionnelle en mousse de polyéthylène. Un tel support d'outil a tendance à se morceler au cours du temps, ce qui déforme les empreintes et augmente le risque que des morceaux de mousse ne soient dispersés lors de l'utilisation des outils. En outre, lorsqu'un liquide est versé par inadvertance sur le support d'outil, le liquide est absorbé par la mousse, ce qui la pollue et l'endommage. De tels inconvénients sont critiques lors du montage d'un moteur, en particulier, dans le domaine aéronautique. En effet, il est important qu'aucun élément étranger ne soit perdu dans le moteur afin de limiter le risque de dysfonctionnement du moteur. L'invention a donc pour but d'éliminer au moins certains de ces inconvénients en proposant un nouveau support d'équipement. Bien que l'invention soit née à l'origine pour supporter un outil, elle s'applique de manière plus générale au support de tout équipement.

### PRESENTATION GENERALE DE L'INVENTION

Un mode de réalisation concerne un support pour équipement, le support comportant au moins une empreinte de réception qui est concave et adaptée pour recevoir au moins en partie l'équipement.

Le support comporte au moins un revêtement en élastomère étanche adapté pour venir en contact avec l'équipement.

Si un liquide est versé sur le support, le liquide n'est pas absorbé par le support, ce qui évite toute dégradation prématurée. En outre, un élastomère présente de bonnes caractéristiques de résistance à la corrosion chimique. Aussi, si un produit chimique (kérosène ou huile moteur) est versé sur le revêtement, celui-ci peut être nettoyé afin de pouvoir être utilisé de nouveau sans aucune perte de performances.

De préférence, le revêtement comporte un mélange d'isocyanates et de polyamines, en particulier, du Polyuréa, c'est-à-dire, une matière polyurée aliphatique ou aromatique. Un tel revêtement possède des qualités d'étanchéité et de résistance à la corrosion chimiques qui sont importantes. Le Polyuréa est ainsi particulièrement avantageux. En outre, du fait de sa souplesse et de son élasticité, il résiste de manière optimale à la déchirure, ce qui est avantageux pour supporter des équipements pointus ou tranchants. Sa durée de vie est par ailleurs très importante. Enfin, un tel revêtement peut être nettoyé à haute pression, ce qui est avantageux.

De manière préférée, le revêtement est constitué de Polyuréa, ce qui simplifie sa fabrication.

De manière préférée, le support comporte un corps principal recouvert dudit revêtement. Cela permet avantageusement de limiter l'épaisseur du revêtement qui est onéreux et d'utiliser un corps principal, remplissant une fonction de noyau, ayant un coût limité. De préférence, le corps principal est en polyuréthane.

Selon un aspect préféré, l'empreinte de réception est adaptée pour coopérer par complémentarité de formes avec au moins une partie de la surface de l'équipement. Ainsi, l'équipement est supporté de manière stable, ce qui limite le risque d'endommagement dudit équipement, en particulier, lors de son transport. Une telle empreinte permet une protection optimale et assure un détrompage. De préférence, l'empreinte de réception est adaptée pour coopérer par complémentarité de formes avec 40%-50% de la surface de l'équipement afin de permettre à un opérateur de sortir ou rentrer aisément l'équipement dans son empreinte.

De manière préférée, le support comporte une pluralité d'empreintes de réception afin de pouvoir recevoir plusieurs équipements identiques ou différents.

Selon un aspect, la surface extérieure du revêtement est plane en dehors de la ou des empreintes de réception de manière à permettre une identification visuelle immédiate du positionnement des empreintes de réception dans le support.

De manière préférée, la couleur du revêtement en dehors de la ou des empreintes de réception est différente de la couleur du revêtement dans la ou les empreintes de réception. Ainsi, la présence d'un équipement dans une empreinte de réception est clairement identifiable visuellement, ce qui permet d'éviter la perte d'équipements lors du montage d'un moteur par exemple. De manière préférée, les empreintes sont colorées avec une couleur vive tandis que la surface extérieure est colorée avec une couleur sombre afin de détecter visuellement la présence d'un équipement de couleur sombre dans une empreinte de réception. Ainsi, une zone de couleur vive sur le support indique un équipement absent.

Un mode de réalisation concerne également un ensemble d'un support tel que présenté précédemment et d'un équipement logé dans l'empreinte de réception du support.

L'invention concerne un procédé de fabrication d'un support pour équipement selon la revendication 1, comportant un corps principal recouvert d'un revêtement, le procédé comprenant :
- une étape de réalisation d'un moule définissant au moins partiellement la surface de l'équipement,
- une étape de dépôt d'un matériau élastomère étanche sur le moule pour former le revêtement du support, et
- une étape de formation du corps principal du support sur le revêtement.

Un tel procédé de fabrication est simple à mettre en oeuvre et permet ainsi de réaliser de petites séries de supports à moindres coûts. En outre, il permet de former une empreinte épousant parfaitement la forme de l'équipement à recevoir. De préférence, le matériau élastomère étanche est déposé par projection afin d'épouser la forme du moule. De préférence, le moule est obtenu par une numérisation 3D d'un équipement existant.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation d'une mallette à outils comportant un support d'outils,
- la figure 2 est une représentation schématique d'un procédé de réalisation d'un support d'outils selon une forme de réalisation de l'invention et
- la figure 3 est une vue en coupe d'une étape de formation du support.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

Il va être présenté un support d'outils selon un mode de réalisation mais il va de soi que le mode de réalisation s'applique au support de tout type d'équipement. A titre d'exemple, pour monter un moteur aéronautique, un opérateur doit utiliser un grand nombre d'outils qui sont rangés dans un support d'outils.

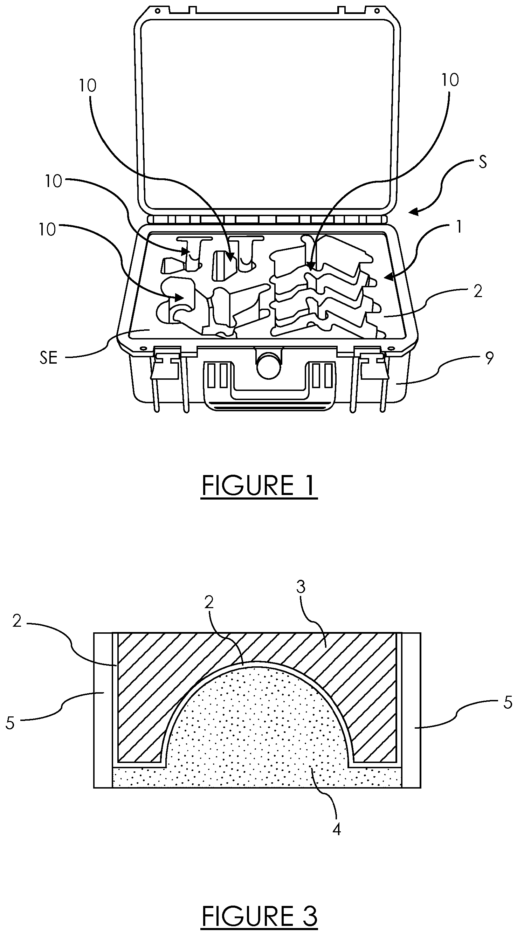

En référence à la figure 1, il est représenté une mallette 9 dans laquelle est logé un support d'outils S selon l'invention. Comme illustré à la figure 1, le support S comporte un corps principal 3 qui est ici de forme rectangulaire avec les bords arrondis néanmoins il va de soi que d'autres formes sont possibles (disque, etc).

Dans cet exemple, le support S comporte une pluralité d'empreintes de réception 10 de manière à accueillir une pluralité d'outils (non représentés sur la figure 1). Chaque empreinte de réception 10 est concave et adaptée pour recevoir au moins en partie de la surface des outils.

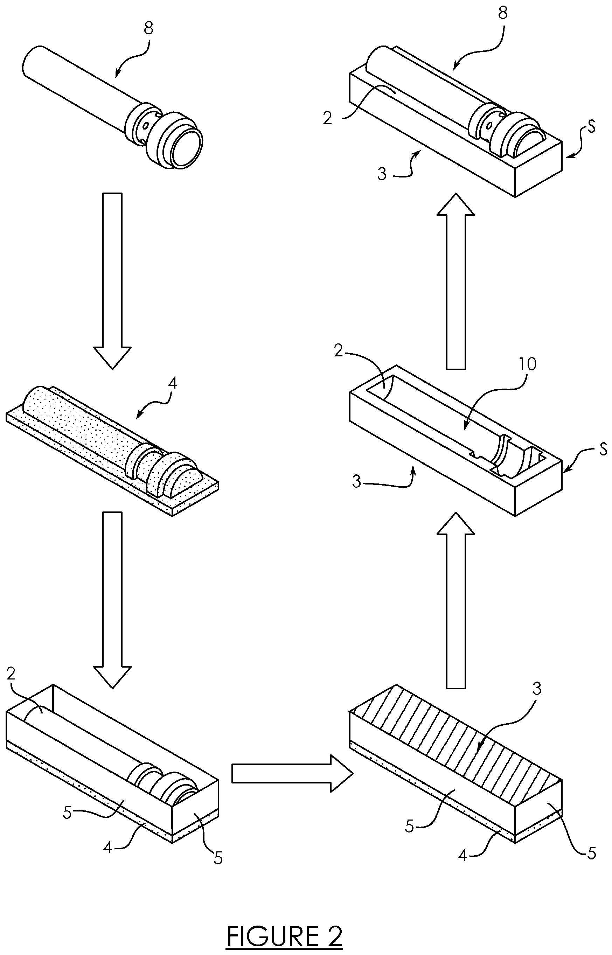

Dans cette forme de réalisation, comme illustré aux figures 2 et 3, chaque empreinte de réception 10 est adaptée pour coopérer par complémentarité de formes avec au moins une partie de la surface d'un outil à supporter. Une telle complémentarité de formes permet à l'empreinte de réception 10 d'épouser partiellement la forme de l'outil à supporter. De manière préférée, l'empreinte de réception 10 est adaptée pour coopérer par complémentarité de formes avec 40%-50% de la surface de l'outil afin de pouvoir le supporter de manière suffisante tout en facilitant sa mise en place et son retrait du support S.

En référence à la figure 1, la surface extérieure SE du support S est plane en dehors des empreintes de réception 10, ce qui permet de limiter l'encombrement du support S et faciliter son logement dans une mallette 9. En outre, cela permet à un opérateur d'identifier de manière visuelle si un logement de réception 10 est vide.

De manière préféré, la couleur de la surface extérieure SE du support S en dehors des empreintes de réception 10 est différente de la couleur des empreintes de réception 10. De manière avantageuse, les empreintes de réception 10 sont clairement identifiables visuellement, ce qui facilite la détection d'un outil manquant par un opérateur. De préférence, la couleur des empreintes de réception 10 est vive et celle de la surface extérieure SE est sombre de manière à mettre en avant une empreinte de réception 10 qui est vide. En effet, comme un outil est généralement sombre, l'aspect visuel extérieur est globalement sombre lorsque tous les outils sont placés dans leurs empreintes de réception respectives. Un outil manquant est aisément détectable car il engendre la présence d'une zone vive sur le support S.

Le corps principal 3 est recouvert d'un revêtement 2 en élastomère étanche comportant du Polyuréa, c'est-à-dire, une matière polyurée aliphatique ou aromatique. De manière préférée, le revêtement 2 est constitué de Polyuréa. De manière connue, le Polyuréa comporte un mélange d'isocyanates et de polyamines. Il va de soi que d'autres élastomères étanches pourraient convenir.

Un tel revêtement 2 permet de rendre étanche la surface du support S afin d'éviter que celui-ci n'absorbe des liquides et ne se détériore. En outre, le revêtement 2 est résistant aux attaques chimiques et n'est pas détérioré en cas de contact avec du kérosène ou de l'huile. Enfin, le revêtement 2 présente une souplesse et une élasticité qui permettent de recevoir un outil de manière sécurisée et stable en épousant sa forme.

Selon un aspect préféré, le Polyuréa comporte du polyol pour former un Polyuréa hybride qui possède un coût réduit.

De manière avantageuse, le revêtement 2 peut être coloré de manière pratique afin que la couleur de la surface extérieure SE du support S en dehors des empreintes de réception 10 soit différente de la couleur des empreintes de réception 10. De manière préférée, le revêtement 2 est peint aux couleurs désirées mais il va de soi que le revêtement 2 pourrait également être coloré dans la masse. Dans cette forme de réalisation, le revêtement 2 possède une épaisseur comprise entre 0.5 mm et 8 mm afin d'assurer un compromis entre performances et coûts.

Une mise en oeuvre d'un procédé de fabrication d'un support S selon l'invention va être dorénavant être présenté.

En référence à la figure 2, le procédé comporte une étape de réalisation d'un moule 4 définissant au moins partiellement la surface d'un équipement 8. Le moule 4 est réalisé à partir d'un modèle numérique de l'équipement 8, le modèle numérique étant réalisé par un logiciel de conception assistée par ordinateur ou obtenu par numération d'un équipement existant 8, en particulier, au moyen d'un scanner 3D.

Dans cet exemple, le moule 4 est réalisé en positif et possède une forme identique à celle de l'équipement 8 à supporter. Le moule 4 est réalisé de préférence à partir d'une planche usinable, en particulier, par usinage.

Le procédé comporte en outre une étape de projection d'un matériau élastomère étanche sur le moule 4 pour former le revêtement 2 du support S. Du Polyuréa est projeté sur le moule 4 afin de former une membrane étanche épousant la forme de l'équipement 8. Le revêtement 2 durcit de manière rapide et forme ainsi le fond de moule 4. De manière préférée, en référence aux figures 2 et 3, des parois de coffrage 5 peuvent être positionnées autour du moule 4 afin de limiter l'étalement du Polyuréa lors de la projection.

En référence à la figure 3, le procédé comporte en outre une étape de formation du corps principal 3 sur le revêtement 2. Dans cet exemple, le corps principal 3 est réalisé en mousse de polyuréthane qui est injectée sur le revêtement 2. De manière préférée, une mousse polyuréthane souple est utilisée. Cela permet avantageusement de former un corps principal 3 qui adhère directement au revêtement 2. De plus, une telle mousse polyuréthane possède une bonne correspondance chimique avec le Polyuréa. Il va de soi que le corps principal 3, également appelé noyau, pourrait également être réalisé dans d'autres matériaux.

En référence à la figure 2, le support S formé par le corps principal 3 et le revêtement 2 est ensuite séparé du moule 4. On obtient ainsi un corps principal 3 qui est recouvert par un revêtement 2 qui est étanche et qui comporte une empreinte de réception 10 qui épouse en partie la forme extérieure de l'équipement 8.

Après nettoyage, le support S peut ensuite directement recevoir un équipement 8 afin de le supporter de manière optimale.

Selon un aspect préféré de l'invention, le revêtement 2 peut être coloré dans la masse afin de former un support S de la couleur désirée. De manière préférée, la surface extérieure SE du support S, qui est située en dehors des empreintes de réception 10, est peinte d'une couleur différente de la couleur initiale du revêtement 2 afin de permettre de mieux distinguer visuellement les empreintes de réception 10. Cela permet de déterminer visuellement si l'équipement 8 est présent ou non comme expliqué précédemment.

Un tel procédé de fabrication est particulièrement avantageux étant donné qu'il permet de former un support S sur mesure en peu d'étapes. Un tel procédé est particulièrement adapté pour les petites séries.

Pour monter un moteur aéronautique, un opérateur dispose d'une servante dans laquelle est positionné un support S qui est bicolore. Du fait de son revêtement 2 en élastomère, en particulier en Polyuréa, le support S ne se morcelle pas et possède une meilleure durée de vie. En outre, le revêtement 2 est étanche et résistant aux produits chimiques (kérosène, huile moteur, etc.). Aussi, si du kérosène est versé par mégarde sur le support S, celui-ci peut être nettoyé de manière pratique, en particulier, avec de l'acétone. Les performances du support S ne sont avantageusement pas dégradées, le support S n'étant pas pollué.

De plus, comme le revêtement 2 épouse la forme de l'équipement 8 à recevoir, celui-ci est supporté de manière stable, ce qui limite tout endommagement lors du transport en cas de chocs ou du fait des vibrations. Outre une protection accrue, une telle empreinte de réception 10 permet un détrompage dans le support S.

Grâce au support S, les empreintes de réception 10 qui sont vides peuvent être identifiées de manière rapide pour éviter qu'un outil ne soit oublié au sein du moteur. De manière avantageuse, on diminue le risque d'endommagement lié à la perte d'outils lors du montage d'un moteur (acronyme anglais FOD pour « Foreign Object Damage »).

L'invention a été présentée pour le support d'outils mais il va de soi qu'elle s'applique également au support de tout équipement, notamment, un équipement aéronautique à forte valeur ajoutée. Un tel équipement est onéreux et doit être supporté et manipulé avec beaucoup de précautions afin d'éviter son endommagement.

L'invention a été présentée dans le cas d'une mallette mais il va de soi qu'elle s'applique à divers moyens de stockage, notamment, une caisse aéronautique « Flight case », empilable ou non, un plateau d'ensemble d'outils, une caisses navette, une caisse atelier et analogue.

## Revendications

1. Procédé de fabrication d'un support (S) pour équipement (8) comportant un corps principal (3) recouvert d'un revêtement (2), le procédé comprenant :
- une étape de réalisation d'un moule (4) comportant au moins une empreinte de réception (10) qui est concave et adaptée pour recevoir au moins en partie l'équipement (8), **caractérisé par le fait que** le moule (4) étant réalisé à partir d'un modèle numérique de l'équipement (8), le modèle numérique étant réalisé par un logiciel de conception assistée par ordinateur ou obtenu par numérisation d'un équipement (8), et en ce que le procédé comporte en outre
- une étape de projection à l'état liquide d'un matériau élastomère étanche sur le moule (4) pour former le revêtement (2) du support (S), le revêtement (2) comportant du Polyuréa et étant adapté pour venir en contact avec l'équipement (8), et
- après durcissement du revêtement (2), une étape de formation du corps principal (3) du support (S) sur le revêtement (2).

2. Procédé selon la revendication 1, dans lequel le corps principal (3) est réalisé en mousse de polyuréthane qui est injectée sur le revêtement (2).

3. Procédé selon l'une des revendications 1 à 2, dans lequel l'empreinte de réception (10) est concave et adaptée pour coopérer par complémentarité de formes avec au moins une partie de la surface de l'équipement (8).

4. Procédé selon la revendication 3, dans lequel l'empreinte de réception (10) est adaptée pour coopérer par complémentarité de formes avec 40%-50% de la surface de l'équipement (8).

## Patentansprüche

1. Verfahren zur Herstellung eines Halters (S) für ein Gerät (8), aufweisend einen Hauptkörper (3), der mit einer Beschichtung (2) bedeckt ist, wobei das Verfahren umfasst:
- einen Schritt des Herstellens einer Form (4), die mindestens einen Aufnahmeabdruck (10) aufweist, der konkav ist und zur mindestens teilweisen Aufnahme des Geräts (8) geeignet ist,
**dadurch gekennzeichnet, dass** die Form (4) ausgehend von einem digitalen Modell des Geräts (8) hergestellt ist, wobei das digitale Modell von einer rechnergestützten Konzeptsoftware hergestellt wird oder durch digitale Erfassung eines Geräts (8) erhalten wird, und
dass das Verfahren ferner aufweist
- einen Schritt des Projizierens eines dichten Elastomermaterials in flüssigem Zustand auf die Form (4), um die Beschichtung (2) des Halters (S) zu bilden, wobei die Beschichtung (2) Polyurea aufweist und geeignet ist, mit dem Gerät (8) in Kontakt zu kommen, und
- einen Schritt des Bildens des Hauptkörpers (3) des Halters (S) auf der Beschichtung (2) nach dem Aushärten der Beschichtung (2).

2. Verfahren nach Anspruch 1, wobei der Hauptkörper (3) aus Polyurethanschaum hergestellt ist, der auf die Beschichtung (2) injiziert wird.

3. Verfahren nach einem der Ansprüche 1 bis 2, wobei der Aufnahmeabdruck (10) konkav und geeignet ist, durch Formkomplementarität mit mindestens einem Teil der Oberfläche des Geräts (8) zusammenzuwirken.

4. Verfahren nach Anspruch 3, wobei der Aufnahmeabdruck (10) geeignet ist, durch Formkomplementarität mit 40-50 % der Oberfläche des Geräts (8) zusammenzuwirken.

## Claims

1. Method for manufacturing a support (S) for an item of equipment (8) comprising a main body (3) covered with a coating (2), the method comprising:
- a step of production of a mould (4) comprising at least one impression (10) which is concave and adapted to accommodate at least partially the item of equipment (8), **characterized in that** the mould (4) being made from a digital model of the item of equipment (8), the digital model being made by computer-aided design software or obtained by digitizing an equipment (8), and that the method also includes
- a step of liquid projection of a sealed elastomer material on to the mould (4) to form the coating (2) of the support (S), the coating (2) comprising polyurea and being suitable to come into contact with the equipment (8), and
- after coating hardening (2), a step of formation of the main body (3) of the support (S) on the coating (2).

2. Method according to claim 1, wherein the main body (3) is made of polyurethane foam which is injected onto the coating (2).

3. Method according to one of claims 1 to 2, in which the impression (10) is concave and designed to cooperate by complementarity of shapes with at least a portion of the surface of the item of equipment (8).

4. Method according to claim 3, in which the impression (10) is designed to cooperate by complementarity of shapes with 40%-50% of the surface of the item of equipment (8).
